# EUROPÄISCHE PATENTSCHRIFT

(11) **EP 1 092 346 B1**
(45) Veröffentlichungstag und Bekanntmachung des Hinweises auf die Patenterteilung: **28.09.2005**
(21) Anmeldenummer: 99250362.3
(22) Anmeldetag: 12.10.1999
(51) Int. Cl.: A01K 1/015

(54) **Leichte, klumpende Kleintierstreu und Verfahren zu deren Herstellung**
Lightweight, clumping small animal litter and process for the preparation
Litière légère pour petits animaux, pouvant former des agglomérats, et procédé pour sa fabrication

(43) Veröffentlichungstag der Anmeldung: 18.04.2001
(73) Patentinhaber: RETEC Recycling, Entwicklungs- und Technologiegesellschaft mbH, 17033 Neubrandenburg (DE)
(72) Erfinder: Pfeifer, Manfred Dr., 17033 Neubrandenburg (DE); Mohnsame, Bernd, 17033 Neubrandenburg (DE)
(74) Vertreter: Voss, Karl-Heinz

(56) Entgegenhaltungen:
- DE-A- 4 341 923
- DE-A- 19 838 194
- DE-U- 29 707 259
- US-A- 4 607 594

## Beschreibung

Die Erfindung betrifft die Bestandteile einer Tierstreu als Aufsaugmittel für Tierexkremente und ein Verfahren zu deren Herstellung.

### [Stand der Technik]

Klumpende Kleintierstreu, vor allem für Katzen, ist in den letzten Jahren in zunehmendem Maße auf dem Markt eingeführt worden. Die erwünschten Verklumpungseigenschaften der Kleintierstreu werden durch aktiv quellfähige Mineralien, wie z. B. natürlich vorkommende Bentonite, erreicht. Die derzeitigen Produkte aus überwiegend mineralischen Grundstoffen weisen Schüttgewichte bis zu 1,2 kg/Liter auf, was aus mehreren Gründen für den Verbraucher nachteilig ist. Außerdem wird immer noch ein großer Teil des verbrauchten Materials über die Spültoilette entsorgt und führt zu einer Erhöhung des Klärschlammanfalls und somit zu einer Kostensteigerung bei der Abwasseraufarbeitung oder zu Verstopfungen der Abwasserleitungen.

Da in Deutschland zur Zeit jährlich mit steigender Tendenz etwa 300.000 Tonnen Katzenstreumaterialien verkauft werden, gibt es ein Interesse daran, leichtere Materialien zu entwikkeln, die außerdem eine bessere Ergiebigkeit aufweisen.

In der Patentanmeldung DE 4341923 wird eine klumpende Katzenstreu beschrieben, die schon ein geringeres Schüttgewicht (600 - 800 g/l) aufweist, aber keinerlei Angaben zur Ergiebigkeit enthält. Als Grundmaterial wird zellulosehaltiger Abfall aus der Papierindustrie verarbeitet, der aufwendig getrocknet werden muß. Dieser steht außerdem nicht überall zur Verfügung. Diese Masse wird zu Pellets geformt und mit Bentonit ummantelt, um ein Verklumpen wie bei mineralischen Saugmitteln zu bewirken.

In der DE PS 3816225 wird vorgeschlagen zu zellulosehaltigem Material (Papierfangstoff) Bimssteinmehl zuzugeben und diese Mischung zu kompaktieren. Das Bimsteinmehl dient der Gewichtseinstellung und wirkt als Aufsaugmittel. Ein optimales Verhältnis zwischen der Aufsaugleistung und der Klumpwirkung ist mit diesem Material aber nicht erzielbar.

Neben dem geringen Schüttgewicht (unter 500 g/Liter) wird eine Ergiebigkeit von weniger als 50 g Kleintierstreu auf Zugabe von 50 ml Wasser gefordert.

### [Aufgabe der Erfindung]

Der Erfindung liegt demnach die Aufgabe zugrunde, eine leichte klumpende Kleintierstreu und ein Verfahren zur Herstellung derselben zu entwickeln, die
- ein Schüttgewicht < 490 g/Liter besitzt,
- eine Ergiebigkeit beim Versetzen mit Wasser (flüssigen Tierexkrementen) von weniger als 50 g Kleintierstreu pro 50 ml Wasserzugabe innerhalb einer Zeit von 8 - 10 sec aufweist,
- eine gute Geruchsbindung erzielt und eine weitestgehende Staubfreiheit besitzt,
- unter Verwendung und dem Einsatz häufig vorhandener, preiswerter Rohstoffe und deren effektiver Verarbeitung erfolgt.

Erfindungsgemäß besteht die Kleintierstreu aus einem Anteil A mit
- 85 bis 96 % zerkleinertem Altpapier,
- 2 - 8 % Wasser,
- 1 - 15% Abfallbentonit,
und einem Anteil B eines quellfähigen Bentonits zum Umhüllen, wobei das Gewichtsverhältnis von Bentonit zum trockenen Altpapier in einem Bereich von 0,5 : 1 bis 2 : 1 liegt.

Die erfindungsgemäße Kleintierstreu wird dadurch hergestellt, daß man zunächst als Ausgangsmaterial geschreddertes Altpapier oder andere zellulosehaltige Abfälle nimmt, diese mit Wasser versetzt, so daß ein Wassergehalt von 25 % bis 60 %, vorzugsweise 35 bis 45 %, entsteht. Dieses Gemisch wird entweder direkt einer Kollerstrangpresse zugeführt oder gegebenenfalls mit einem Intensivmischer bzw. Doppelschnekkenzerkleinerer grob zerfasert und dann durch eine Kollerstrangpresse dem Granulierprozeß unterworfen. Die Entscheidung, welcher Weg zu wählen ist, hängt vom Schreddergut ab: gröberes Schreddergut muß vorzerkleinert werden, kleineres kann direkt eingesetzt werden.

In der Kollerstrangpresse wird vorzugsweise ein größeres Granulat erzeugt. Die endgültige Granulatform wird anschlie-ßend in einem 2. Schritt gestaltet.

Das große Granulat hat Abmessungen von 4 - 12 mm, vorzugsweise 7 - 9 mm Durchmesser und 4 - 30 mm, vorzugsweise 5 - 12 mm Länge.

Das kleine Granulat hat Abmessungen von 1 - 3 mm, vorzugsweise 2 mm Durchmesser und 1 bis 5 mm, vorzugsweise 2 - 3 mm Länge.

Die angegebenen Durchmesser der Granulate werden durch die Lochmatrizen bestimmt, die Länge durch den Abstand der Messer in der Kollerstrangpresse.

Wird Altpapier ohne Zusätze verarbeitet, entstehen Granulate mit einem Trockenschüttgewicht von 150 - 200 g/Liter, die in der Weiterverarbeitung zum Endprodukt zu einer Kleintierstreu von unter 350 g/Liter führen. Diese Kleintierstreu bildet allerdings zu weiche Klumpen und ist daher ungeeignet. Außerdem zerfasern die Granulate bei der in einem rotierenden Mischer bei gleichzeitiger Einwirkung von Zerkleinerungselementen erfolgenden Erhöhung des Wassergehaltes auf 45 - 65 %, vorzugsweise 54 - 57 %. Dabei erfolgt gleichzeitig eine Kompaktierung.

Erfindungsgemäß wird dem Altpapier nach der ersten Granulation, das dann einen Wassergehalt von 30 - 50 %, vorzugsweise 40 - 45 %, besitzt, Abfallbentonit (Rückführung aus dem Herstellungsprozeß nach Trocknung und Siebung) in trockenen Zustand zugesetzt und das Gemisch erneut granuliert. Durch diesen erfindungsgemäßen Zusatz wird eine gute Ausbildung der Granulate erreicht und eine genügende Festigkeit beim weiteren Aufwässern gesichert. Es hat sich überraschend gezeigt, daß die im Altpapier enthaltenen Leimanteile mit dem Abfallbentonit eine sehr gute Festigkeit ergeben und andererseits die Granulate eine hohe Saugkraft behalten. Bisher wurde davon ausgegangen, daß die Leimbestandteile die Saugwirkung negativ beeinträchtigen und hat diese entfernt, bzw. möglichst reine Zellulose verwendet.

Durch den Aufwässerungsvorgang in einem rotierenden Mischer, bei gleichzeitigem Einwirken von Zerkleinerungselementen, wird die erforderliche Kompaktierung erreicht. Durch diese erfindungsgemäße Prozeßstufe erhöht sich das Trockenschüttgewicht von 220 bis 250 g/Liter auf 260 bis 330 g/Liter. Das so vorbereitete Granulat wird dann einer Behandlung mit feingemahlenem weißem Bentonit bei Beachtung des Verhältnisses trockenes Altpapiergranulat : Bentonit wie 1 : 0,5 bis 1 : 2, vorzugsweise 1 : 0,8 bis 1 : 1,2 in der Form unterzogen, daß Bentonit vorgelegt wird, die nassen Granulate zugegeben werden und die Rolliertrommel oder andere geeignete Aggregate 0,5 bis 6 Minuten, vorzugsweise 1 bis 1,5 Minuten, bis zum Erkennen des Zusammenklebens der Granulate in Bewegung gehalten wird. Das feuchte, mit Bentonit ummantelte Granulat, wird in üblichen Anlagen getrocknet und der Unterkornanteil von unter 1 mm über eine Siebanlage entfernt.

Es ist weiterhin überraschender Weise gefunden worden, daß durch die Behandlung des getrockneten Fertigproduktes (Wassergehalt: 3 - 6 %) mit gasförmigem NH₃ in geringen Mengen, die Bentonitoberfläche so beeinflußt bzw. aktiviert wird, daß es zu einer bedeutenden Beschleunigung der Wasseraufnahme kommt. Die beschleunigte Wasseraufnahme sichert eine gute Klumpenbildung und läßt die vorgegebene Ergiebigkeit erreichen, trotz der Tatsache, daß das Unterkorn von unter 1 mm entfernt worden ist.

Einen ähnlichen Effekt kann man erreichen, wenn 1 - 10 %, vorzugsweise 3 - 5% Kalziumhydroxid dem Bentonit zum Ummanteln zugegeben werden.

Das erfindungsgemäße Produkt und Verfahren zur Herstellung, soll an Beispielen erläutert werden, ohne daß dadurch der Erfindungsumfang eingeschränkt wird.

### Beispiel 1:

10 kg geschreddertes Altpapier (1 x 8 cm) wird in einen Intensivmischer mit 8,1 kg Wasser versetzt und 30 min behandelt.

Das teilweise zerfaserte Material wird mit 0,5 kg Abfallbentonit versetzt und über eine Kollerstrangpresse gefahren, die eine 2 mm Lochmatrize mit einem Messerabstand von 2 mm besitzt.

Das anfallende Granulat hat ein Wassergehalt von 45 %. Durch die Temperatur in der Kollerstrangpresse von über 70 °C, geht ein geringer Teil der Feuchtigkeit verloren.

In einem rotierenden Mischer werden zu den 19,7 kg Granulat 7 kg Wasser gegeben und das Ganze 20 min unter Zugabe mehreren runden Steinen gemischt. Das entstehende Granulat hat einen Wassergehalt von 55 %.

In einem weiteren Mischer werden 15 kg feingemahlener weißer Bentonit vorgelegt, das nasse Papiergranulat auf einmal hinzugefügt und 1 min gemischt.

Zum Schluß der Ummantelung bekommt das Granulat eine graue Einfärbung und es beginnt infolge des Durchdringens der Feuchtigkeit bis zum Außenbereich zu klumpen. Beim Auftreten dieser Erscheinung ist der Vorgang zu beenden. Nach dem Trocknen wird das Granulat durch ein Rüttelsieb vom Unterkorn bis 1 mm befreit.

Das so vorbereitete Granulat wird durch Einblasen eines NH₃-Luftgemisches aktiviert.

Die Analyse der klumpenden Kleintierstreu ergibt:

| | | |
|---|---|---|
| ⇒ | Schüttgewicht | 435 g/Liter |
| ⇒ | Ergiebigkeit | 43 g Streu/50 .g Wasser * |
| ⇒ | Staub | 0,1 % |
| ⇒ | Farbe | hellgrau |

| | | |
|---|---|---|
| * Die Wasserzugabe muß innerhalb von 8 - 10 sec erfolgen. | | |

Der feuchte Klumpen übersteht einen Rütteltest von 1 min bei der Einstellung 10 auf einem Rüttelsieb.

### Beispiel 2:

10 kg geschreddertes Altpapier (1 x 8 cm) wird mit 8 kg Wasser vermischt und sofort in einer Kollerstrangpresse mit einer 8 mm Matrize bei einem Messerabstand von 5 mm granuliert.

Dieses Granulat wird mit 0,8 kg Abfallbentonit versetzt und über die 2 mm Matrize bei einem Messerabstand von 2 mm gefahren.

Das nach der 2. Kollerstrangpressendurchführung erhaltene Granulat wird, wie unter Beispiel 1 beschrieben, weiterverarbeitet.

Dem feinkörnigen weißen Bentonit wird vorher 3 % Kalziumhydroxid zugegeben und wie unter Beispiel 1 beschrieben, verarbeitet.

Die Nachaktivierung mit NH₃ entfällt.

Das anfallende Endprodukt hat folgende Analysenwerte:

| | | |
|---|---|---|
| ⇒ | Schüttgewicht | 450 g/Liter |
| ⇒ | Ergiebigkeit | 45 g Streu/50 g Wasser |
| ⇒ | Staub | 0,2 % |
| ⇒ | Farbe | grau |

Der feuchte Klumpen übersteht einen Rütteltest von 1 min bei der Einstellung 10 auf dem Rüttelsieb.

### Beispiel 3

Ein Gemisch, bestehend aus 7 kg geschredderten Altpapier (1 x 8 mm), 1,5 kg Holzmehl und 1,5 kg gemahlenen Stroh wird mit 8 kg Wasser versetzt und mit Hilfe einer Kollerstrangpresse bei Verwendung einer Matrize von 8 mm und einem Messerabstand von 5 mm granuliert.

Das anfallende Granulat wird mit 1 kg Abfallbentonit versetzt und erneut über die Kollerstrangpresse mit einer Matrize von 2 mm und einem Messerabstand von 2 mm gefahren.

Dieses Granulat wird wie unter Beispiel 1 beschrieben weiterverarbeitet und mit NH₃ aktiviert.

Analysenergebnis:

| | | |
|---|---|---|
| ⇒ | Schüttgewicht | 460 g/Liter |
| ⇒ | Ergiebigkeit | 47 g Streu / 50 g Wasser |
| ⇒ | Staub | 0,15 % |
| ⇒ | Farbe | hellgrau |

Der feuchte Klumpen übersteht einen Rütteltest von 1 min bei der Einstellung 10 auf dem Rüttelsieb.

## Patentansprüche

1. Leichte klumpende Kleintierstreu, bestehend aus zerkleinertem zellulosehaltigem Material, Wasser und Mineralien, daß sphärisch geformt ist, **dadurch gekennzeichnet, daß** diese aus einem Anteil A mit 85 bis 96 % zerkleinertem Altpapier, 2- 8 % Wasser, 1 - 15% Abfallbentonit und einem Anteil B eines quellfähigen Bentonits zum Umhüllen besteht, wobei das Gewichtsverhältnis von Bentonit zum trockenen Altpapier in einem Bereich von 0,5 : 1 bis 2 : 1 liegt.

2. Kleintierstreu nach Anspruch 1, **dadurch gekennzeichnet, daß** diese mit Ammoniak aktiviert ist.

3. Kleintierstreu nach einem Anspruch 1, **dadurch gekennzeichnet, daß** das Bentonit zur Umhüllung einen Anteil von 1 bis 6 % an Kalziumhydroxid enthält.

4. Verfahren zur Herstellung von Kleintierstreu, bei dem zellulosehaltiges Material unter Zugabe von Zuschlagstoffen zerkleinert, gemischt und dann granuliert wird, **dadurch gekennzeichnet, daß**
• das geschreddertes Altpapier mit den Abmessungen von 2 mm x 10 mm bis 30 mm x 300 mm unter Zugabe von Wasser in einem Intensivmischer oder Doppelschneckenzerkleinerer grob zerfasert und dabei der Wassergehalt auf 25 bis 60 % eingestellt,
• das zerfaserte Altpapier mit Hilfe einer Kollerstrangpresse unter Zusatz 1 - 20 % Abfallbentonit granuliert,
• der Wassergehalt des nach der Kollerstrangpresse anfallenden Granulates auf 45 - 65 % eingestellt,
• das angefeuchtete Granulat mit feingemahlenem Bentonit ummantelt wird.

5. Verfahren zur Herstellung von Kleintierstreu nach Anspruch 4, **dadurch gekennzeichnet, daß** geschreddertes Altpapier mit den Abmessungen von 2 mm x 10 mm bis 30 mm x 300 mm, vorzugsweise 10 mm x 80 mm, oder andere zerkleinerte zellulosehaltigen Materialien in einem Intensivmischer oder Doppel-schneckenzerkleinerer grob zerfasert wird.

6. Verfahren zur Herstellung von Kleintierstreu nach Anspruch 4 und 5, **dadurch**-**gekennzeichnet**, daß der Wassergehalt auf 35 bis 45 % eingestellt wird.

7. Verfahren zur Herstellung von Kleintierstreu nach Ansprüchen 4 bis 6, **dadurch gekennzeichnet, daß** das zerfaserte Altpapier mit Hilfe einer Kollerstrangpresse unter Zusatz von 1 - 20 % Abfallbentonit, vorzugsweise 5 - 10 % Abfallbentonit, granuliert wird.

8. Verfahren zur Herstellung von Kleintierstreu nach Ansprüchen 4 bis 7, **dadurch gekennzeichnet, daß** Granulate von 1 bis 3 mm, vorzugsweise 2 mm Durchmesser und 1 bis 5 mm, vorzugsweise 2 - 3 mm Länge entstehen.

9. Verfahren zur Herstellung von Kleintierstreu nach Ansprüchen 4 bis 8, **dadurch gekennzeichnet, daß** sowohl in einem Durchgang als auch in 2 Durchgängen granuliert werden kann.

10. Verfahren zur Herstellung von Kleintierstreu nach Ansprüchen 4 bis 9, **dadurch gekennzeichnet, daß** beim ersten Durchgang eine 4 - 10 mm, vorzugsweise eine 8 mm Lochmatrize, mit einem Messerabstand von 5 - 30 mm, vorzugsweise 7 bis 8 mm und beim zweiten Durchgang eine 1,5 bis 3 mm, vorzugsweise 2 mm Lochmatrize, mit einem Messerabstand von 1 bis 6 mm, vorzugsweise 2 bis 3 mm, eingesetzt wird.

11. Verfahren zur Herstellung von Kleintierstreu nach Ansprüchen 4 bis 10, **dadurch gekennzeichnet, daß** der Wassergehalt des nach der Kollerstrangpresse anfallenden Altpapiergranulates auf 45 - 65 %, vorzugsweise 54 - 57 %, eingestellt wird.

12. Verfahren zur Herstellung von Kleintierstreu nach Ansprüchen 4 bis 11, **dadurch gekennzeichnet, daß** die Wasserzugabe in einem rotierenden Mischer erfolgt, und daß das Granulat 5 bis 45 min, vorzugsweise 15 bis 20 min, unter Zusatz von Zerkleinerungselementen rolliert wird.

13. Verfahren zur Herstellung von Kleintierstreu nach Ansprüchen 4 bis 12, **dadurch gekennzeichnet, daß** das angefeuchtete Altpapiergranulat von 45 - 65 % Wasser, vorzugsweise 54 - 56 % Wasser, in einem rotierenden Mischer mit feingemahlenem Bentonit ummantelt wird.

14. Verfahren zur Herstellung von Kleintierstreu nach Ansprüchen 4 bis 13, **dadurch gekennzeichnet, daß** das Verhältnis von trockenem Altpapier zu Bentonit wie 1 : 0,5 bis 1 : 2, vorzugsweise 1 : 1 bis 1 : 1,5, eingestellt wird.

15. Verfahren zur Herstellung von Kleintierstreu nach Ansprüchen 4 - 14, **dadurch gekennzeichnet, daß** Bentonit vorgegeben und das feuchte Altpapiergranulat innerhalb von 0,5 bis 7 min, vorzugsweise 1 - 2 min, bis zur Durchfeuchtung rolliert wird.

16. Verfahren zur Herstellung von Kleintierstreu nach Ansprüchen 4 bis 15, **dadurch gekennzeichnet, daß** nach Trocknung und Entfernung des Anteils unter 1 mm eine Aktivierung der fertigen Kleintierstreu mit geringer Menge gasförmigen Ammoniaks erfolgt.

17. Verfahren zur Herstellung von Kleintierstreu nach Ansprüchen 4 bis 16, **dadurch gekennzeichnet, daß** dem Bentonit 1 bis 10 %, vorzugsweise 3 - 5 %, eines feingemahlen Kalziumhydroxids zur Aktivierung vor der Ummantelung zugegeben wird.

## Claims

1. Light-weight clotting litter for small animals, consisting of shredded cellulose-containing material, water and minerals, spherically shaped, **characterised in that** the same consists of a portion A with 85 to 96 % shredded wastepaper, 2 to 8 % water, 1 to 15 % waste bentonite and a portion B of a swellable bentonite for covering, with the weight ratio of bentonite to dry wastepaper being in the range of 0.5 : 1 to 2 : 1.

2. Litter for small animals according to Claim 1, **characterised in that** the same is activated with ammonia.

3. Litter for small animals according to Claim 1, **characterised in that** the bentonite for covering contains between 1 and 6 % calcium hydroxide.

4. Method for the production of litter for small animals in which cellulose-containing material - with the addition of additives - is shredded, mixed and then granulated, **characterised in that**
• the shredded wastepaper with the dimensions of 2 mm x 10 mm up to 30 mm x 300 mm is coarsely disintegrated in a power mixer or a twin-screw crushing plant with the addition of water, the water content being set at 25 to 60 %,
• the disintegrated wastepaper is granulated by means of a pan-grinding extruder with the addition of 1 to 20 % waste bentonite,
• the water content of the granules obtained after processing in the pan-grinding extruder is set at 45 to 65 %,
• the moistened granules are covered with finely ground bentonite.

5. Method for the production of litter for small animals according to Claim 4, **characterised in that** shredded wastepaper with the dimensions of 2 mm x 10 mm up to 30 mm x 300 mm, preferably 10 mm x 80 mm, or other shredded cellulose-containing materials is/are coarsely disintegrated in a power mixer or in a twin-screw crushing plant.

6. Method for the production of litter for small animals according to Claims 4 and 5, **characterised in that** the water content is set at 35 to 45 %.

7. Method for the production of litter for small animals according to Claims 4 to 6, **characterised in that** the disintegrated wastepaper is granulated by means of a pan-grinding extruder with the addition of 1 to 20 % waste bentonite, preferably 5 to 10 % waste bentonite.

8. Method for the production of litter for small animals according to Claims 4 to 7, **characterised in that** granules with a diameter of 1 to 3 mm, preferably 2 mm, and a length of 1 to 5 mm, preferably 2 to 3 mm, are produced.

9. Method for the production of litter for small animals according to Claims 4 to 8, **characterised in that** granules can be produced both in one operation and in two operations.

10. Method for the production of litter for small animals according to Claims 4 to 9, **characterised in that** for the first operation a 4 to 10 mm, preferably an 8 mm, punch die with a knife distance of 5 to 30 mm, preferably 7 to 8 mm, and for the second operation a 1.5 to 3 mm, preferably 2 mm, punch die with a knife distance of 1 to 6 mm, preferably 2 to 3 mm, is used.

11. Method for the production of litter for small animals according to Claims 4 to 10, **characterised in that** the water content of the wastepaper granules produced by the pan-grinding extruder is set at 45 to 65 %, preferably 54 to 57 %.

12. Method for the production of litter for small animals according to Claims 4 to 11, **characterised in that** the water is added in a rotating mixer and that the granules are tumbled 5 to 45 minutes, preferably 15 to 20 minutes, with the addition of disintegration elements.

13. Method for the production of litter for small animals according to Claims 4 to 12, **characterised in that** the moistened wastepaper granules of 45 to 65 % water, preferably 54 to 56 % water, are covered with finely ground bentonite in a rotating mixer.

14. Method for the production of litter for small animals according to Claims 4 to 13, **characterised in that** the ratio of dry wastepaper to bentonite is set at 1 : 0.5 to 1 : 2, preferably 1 : 1 to 1 : 1.5.

15. Method for the production of litter for small animals according to Claims 4 to 14, **characterised in that** bentonite is contained and that the moistened wastepaper granules are tumbled between 0.5 and 7 minutes, preferably 1 to 2 minutes, until they are thoroughly moistened.

16. Method for the production of litter for small animals according to Claims 4 to 15, **characterised in that** after drying and after the removal of parts below 1 mm the produced litter for small animals is activated with a small quantity of gaseous ammonia.

17. Method for the production of litter for small animals according to Claims 4 to 16, **characterised in that** 1 to 10 %, preferably 3 to 5 %, of a finely ground calcium hydroxide is added to the bentonite for activation before covering.

## Revendications

1. Litière légère et agglomérable pour petits animaux, composée de matière cellulosique fragmentée, d'eau et de minéraux, sphériquement moulée, **caractérisée en ce qu'**elle comprend une part A de 85 à 96 % de vieux papier broyé, de 2 à 8 % d'eau, de 1 à 15 % de bentonite recyclée, et une part B d'une bentonite expansible pour l'enrobage, le rapport de poids entre la bentonite et le vieux papier sec étant compris dans une plage de 0,5 : 1 à 2 : 1.

2. Litière pour petits animaux selon la revendication 1, **caractérisée en ce qu'**elle est activée à l'ammoniac.

3. Litière pour petits animaux selon la revendication 1, **caractérisée en ce que** la bentonite pour l'enrobage comprend une part de 1 à 6 % d'hydroxyde de calcium.

4. Procédé pour la fabrication de litière pour petits animaux, où la matière cellulosique est fragmentée, mélangée puis granulée, avec ajout d'additifs, **caractérisé en ce que**
• le vieux papier découpé aux dimensions de 2 mm x 10 mm jusqu'à 30 mm x 300 mm est grossièrement défibré avec ajout d'eau dans un mélangeur intensif ou broyeur à deux vis, la teneur d'eau étant réglée de 25 à 60 %,
• le vieux papier défibré est granulé au moyen d'une extrudeuse à galet avec ajout de 1 à 20 % de bentonite recyclée,
• la teneur d'eau du granulat à la sortie de l'extrudeuse à galet est réglée entre 45 et 65 %,
• le granulat humidifié est enrobé de bentonite finement broyée.

5. Procédé pour la fabrication de litière pour petits animaux selon la revendication 4, **caractérisé en ce que** le vieux papier découpé aux dimensions de 2 mm x 10 mm jusqu'à 30 mm x 300 mm, préférentiellement 10 mm x 80 mm, ou d'autres matières cellulosiques fragmentées sont grossièrement défibrés dans un mélangeur intensif ou broyeur à deux vis.

6. Procédé pour la fabrication de litière pour petits animaux selon les revendications 4 et 5, **caractérisé en ce que** la teneur d'eau est réglée entre 35 et 45 %.

7. Procédé pour la fabrication de litière pour petits animaux selon les revendications 4 à 6, **caractérisé en ce que** le vieux papier défibré est granulé au moyen d'une extrudeuse à galet avec ajout de 1 à 20 % de bentonite recyclée, préférentiellement de 5 à 10 % de bentonite recyclée.

8. Procédé pour la fabrication de litière pour petits animaux selon les revendications 4 à 7, **caractérisé en ce que** sont produits des granulats de 1 à 3 mm, préférentiellement 2 mm de diamètre et de 1 à 5 mm, préférentiellement 2 - 3 mm de long.

9. Procédé pour la fabrication de litière pour petits animaux selon les revendications 4 à 8, **caractérisé en ce que** la granulation est possible aussi bien en un passage qu'en deux passages.

10. Procédé pour la fabrication de litière pour petits animaux selon les revendications 4 à 9, **caractérisé en ce que** pour le premier passage est mise en oeuvre une matrice emporte-pièce de 4 à 10 mm, préférentiellement de 8 mm, avec un écartement de lame 5 à 30 mm, préférentiellement 7 à 8 mm, et pour le deuxième passage une matrice emporte-pièce de 1,5 à 3 mm, préférentiellement de 2 mm, avec un écartement de lame 1 à 6 mm, préférentiellement 2 à 3 mm.

11. Procédé pour la fabrication de litière pour petits animaux selon les revendications 4 à 10, **caractérisé en ce que** la teneur d'eau du granulat de vieux papier à la sortie de l'extrudeuse à galet est réglée entre 45 et 65 %, préférentiellement entre 54 et 57 %.

12. Procédé pour la fabrication de litière pour petits animaux selon les revendications 4 à 11, **caractérisé en ce que** l'ajout d'eau est effectué dans un mélangeur rotatif, et **en ce que** le granulat est roulé pendant 5 à 45 minutes, préférentiellement entre 15 et 20 minutes, avec ajout d'éléments de fragmentation.

13. Procédé pour la fabrication de litière pour petits animaux selon les revendications 4 à 12, **caractérisé en ce que** le granulat de vieux papier humidifié à 45 - 65 % d'eau, préférentiellement entre 54 et 56 % d'eau, est enrobé de bentonite finement broyée dans un mélangeur rotatif.

14. Procédé pour la fabrication de litière pour petits animaux selon les revendications 4 à 13, **caractérisé en ce que** le rapport entre le vieux papier sec et la bentonite est réglé pour être compris entre 1 : 0,5 et 1 : 2, préférentiellement entre 1 : 1 et 1 : 1,5.

15. Procédé pour la fabrication de litière pour petits animaux selon les revendications 4 à 14, **caractérisé en ce que** la bentonite est présente et **en ce que** le granulat de vieux papier humide est roulé pendant 0,5 à 7 minutes, préférentiellement entre 1 et 2 minutes, jusqu'à imprégnation d'humidité.

16. Procédé pour la fabrication de litière pour petits animaux selon les revendications 4 à 15, **caractérisé en ce qu'**après séchage et séparation de la part inférieure à 1 mm, une activation de la litière finie est effectuée avec une faible quantité d'ammoniac gazeux.

17. Procédé pour la fabrication de litière pour petits animaux selon les revendications 4 à 16, **caractérisé en ce que** de 1 à 10 %, préférentiellement de 3 à 5 %, d'un hydroxyde de calcium finement broyé est ajouté à la bentonite pour l'activation avant enrobage.
